(19) Europäisches Patentamt / European Patent Office / Office européen des brevets

(11) **EP 4 404 426 B1**

(12) **EUROPEAN PATENT SPECIFICATION**

(45) Date of publication and mention
of the grant of the patent:
**26.11.2025 Bulletin 2025/48**

(21) Application number: **22887368.3**

(22) Date of filing: **23.09.2022**

(51) International Patent Classification (IPC):
*H02J 7/34* *(2006.01)*    *H02J 7/00* *(2006.01)*
*H01M 10/42* *(2006.01)*

(52) Cooperative Patent Classification (CPC):
**H01M 10/42; H01M 10/44; H01M 10/48;**
**H02J 7/00304; H02J 7/0031; H02J 7/0047;**
**H02J 7/0063;** H01M 2010/4271; H02J 7/345;
Y02E 60/10

(86) International application number:
**PCT/KR2022/014260**

(87) International publication number:
**WO 2023/075164 (04.05.2023 Gazette 2023/18)**

(54) **BATTERY DEVICE, BATTERY MANAGEMENT SYSTEM, AND PRECHARGE DURATION SETTING METHOD**

BATTERIEVERWALTUNGSSYSTEM, VERFAHREN ZUR KONFIGURATION DER VORLADUNGSPERIODE UND BATTERIEVORRICHTUNG

SYSTÈME DE GESTION DE BATTERIE, PROCÉDÉ DE CONFIGURATION DE PÉRIODE DE PRÉCHARGE ET DISPOSITIF DE BATTERIE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority:  **01.11.2021   KR 20210147896**

(43) Date of publication of application:
**24.07.2024 Bulletin 2024/30**

(73) Proprietor: **LG Energy Solution, Ltd.**
**Seoul 07335 (KR)**

(72) Inventor: **LEE, Hojoon**
**Daejeon 34122 (KR)**

(74) Representative: **Plasseraud IP**
**104 Rue de Richelieu**
**CS92104**
**75080 Paris Cedex 02 (FR)**

(56) References cited:
JP-A- 2020 174 462    JP-A- 2021 027 605
KR-A- 20090 039 891    KR-A- 20180 068 370
KR-A- 20180 068 370    KR-B1- 100 867 834
US-A1- 2011 128 662    US-A1- 2020 195 016

## Description

### [Technical Field]

The disclosure relates to a battery management system, a precharge duration setting method, and a battery device.

### [Background Art]

Electric vehicles and hybrid vehicles are vehicles obtaining power by mainly using batteries as power sources for driving motors, and are alternatives capable of solving pollution and energy problems of internal combustion vehicles. For this reason, research has been actively carried out on them. Further, rechargeable batteries have been used in vehicles and even in various other external apparatuses.

Recently, as high-power high-capacity batteries have been needed, battery packs including a plurality of battery cells connected in series or parallel have been used. Furthermore, the potential risk of battery packs has increased as their power and capacity have increased. Particularly, when an overcurrent flows in a battery pack, if the overcurrent is not diagnosed, due to the overcurrent, problems may occur in external devices.

In order to prevent rush current of such overcurrent which is generated in the initial stage of driving, precharge circuits have been used. Precharge circuits can prevent rush current by first charging capacitors connected to inverters and so on of external devices through precharge resistors in the initial stage of driving. By the way, if the time that it takes to precharge a capacitor is not sufficient, a main switch may be closed in the state where the capacitor has not been charged to a sufficient voltage. In this case, the main switch may be damaged due to the difference between the voltage of the battery pack and the voltage of the capacitor.

Embodiments and examples from prior art are presented in the documents KR 2018 0068370 A, JP 2021 027605 A, US 2020/195016 A1. In detail, the document KR 2018 0068370 discloses a method and a system to precharge a high voltage DC link capacitor in a vehicle. The method includes the following steps: shorting a precharge relay connected between a main battery and the DC link capacitor to start precharging by using the power of the main battery; setting the precharge time of the high voltage DC link capacitor based on at least one of the state of the auxiliary battery and the state of the precharge relay; and determining the success/ failure of precharge based on the voltage of the DC link capacitor after the elapse of the precharge time.

### [Disclosure]

### [Technical Problem]

The present disclosure has been made in an effort to provide a battery device, a battery management system, and a precharge duration setting method having merits of being capable of minimizing damage to a main switch.

### [Technical Solution]

An embodiment provides a battery management device as defined by the independent claim 1.

In some embodiments, the processor may set the maximum value of the target times estimated respectively in the plurality of cycles, as the time of the precharge duration of the next cycle.

In some embodiments, in each cycle, the processor may perform precharge by closing the precharge switch during the precharge duration, and close the positive main switch after the precharge duration, and estimate the target time on the basis of a first voltage of the positive connection terminal immediately before closing the positive main switch and a second voltage of the positive connection terminal immediately after closing the positive main switch.

In some embodiments, the battery device may further include a precharge resistor that is connected between the positive terminal and the positive connection terminal when the precharge switch is closed.

In some embodiments, the precharge switch and the precharge resistor may be connected in series.

In some embodiments, the processor may estimate a time constant that is defined by the resistance value of the precharge resistor and the capacitance of the capacitor, on the basis of the first voltage and the second voltage, and estimate a predetermined multiple of the time constant as the target time.

In some embodiments, the predetermined multiple may be 5 times the time constant.

In some embodiments, in a cycle in which the time of the precharge duration has not been set, the processor may set the time of the precharge duration of the corresponding cycle on the basis of the time taken for the voltage of the positive connection terminal to reach a predetermined voltage in the precharge duration.

In some embodiments, the predetermined voltage may be a voltage corresponding to a predetermined ratio to the voltage of the battery pack.

In some embodiments, the predetermined ratio may be determined on the basis of the predetermined multiple of the time constant defined by the resistance value of the precharge resistor and the capacitance of the capacitor.

In some embodiments, in a cycle in which the time of the precharge duration has not been set, the processor may estimate the time constant on the basis of the time taken for the voltage of the positive connection terminal to reach the predetermined voltage during the precharge duration, and set the predetermined multiple of the time constant as the time of the precharge duration of the corresponding cycle.

In some embodiments, the predetermined multiple may be 6 times the time constant.

Another embodiment provides a precharge duration setting method as defined by the independent claim 10.

In some embodiments, the step of setting the time of the precharge duration may include a step of setting the maximum value of the target times estimated respectively in the plurality of cycles, as the time of the precharge duration of the next cycle.

In some embodiments, the step of estimating the target time may include a step of applying the voltage of the battery pack to the positive connection terminal after performing the precharge operation, a step of measuring the voltage of the positive connection terminal as a first voltage immediately before applying the voltage of the battery pack, a step of measuring the voltage of the positive connection terminal as a second voltage immediately after applying the voltage of the battery pack, and a step of estimating the target time on the basis of the first voltage and the second voltage.

In some embodiments, the step of estimating the target time on the basis of the first voltage and the second voltage may include a step of estimating a time constant that is defined by the resistance value of the precharge resistor and the capacitance of the capacitor, on the basis of the first voltage and the second voltage, and a step of estimating a predetermined multiple of the time constant as the target time.

In some embodiments, the precharge duration setting method may be a precharge duration setting method further including a step of setting the time of the precharge duration of a cycle in which the time of the precharge duration has not been set, on the basis of the time taken for the voltage of the positive connection terminal to reach a predetermined voltage, during the precharge duration of the corresponding cycle.

Yet another embodiment provides a battery device including a battery and a battery management system as previously described.

**[Description of the Drawings]**

FIG. 1 is a drawing illustrating a battery device according to an embodiment.

FIG. 2 is a drawing illustrating switching timings in the battery device according to the embodiment.

FIG. 3 is a flow chart illustrating an example of a precharge duration setting method of a battery device according to an embodiment.

FIG. 4 is a drawing illustrating an example of an equivalent circuit of a battery device according to an embodiment during a precharge duration.

FIG. 5 is a drawing illustrating an example of the voltage of a positive connection terminal in a battery device according to an embodiment.

FIG. 6 is a drawing illustrating voltage ratios depending on multiples of a time constant.

FIG. 7 is a flow chart illustrating an example of a method of setting an initial value of a precharge time in a battery device according to another embodiment.

**[Mode for Invention]**

In the following detailed description, only certain embodiments have been shown and described, simply by way of illustration. As those skilled in the art would realize, the described embodiments may be modified in various different ways, all without departing from the spirit or scope of the present disclosure. Accordingly, the drawings and description are to be regarded as illustrative in nature and not restrictive. Like reference numerals designate like elements throughout the specification.

It should be understood that when a constituent element is referred to as being "connected" to another constituent element, it may be directly connected to the other constituent element, or other constituent elements may be present between them. In contrast, it should be understood that when a constituent element is referred to as being "directly connected" to another constituent element, there is no other constituent element between them.

In the following description, expressions written in the singular forms can be comprehended as the singular forms or plural forms unless clear expressions such as "a", "an", or "single" are used.

In the flow charts described with reference to the drawings, the order of operations may be changed, and several operations may be combined, and an operation may be divided, and some operations may not be performed.

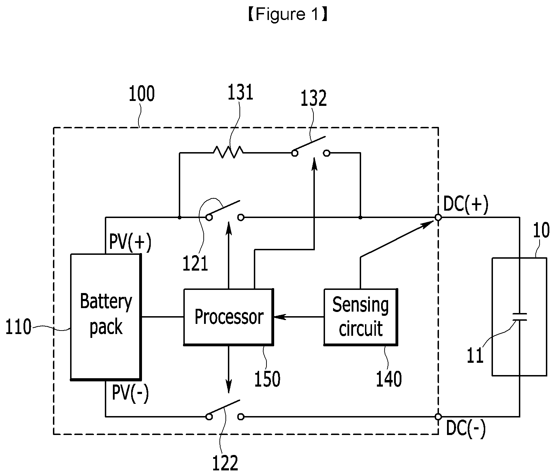

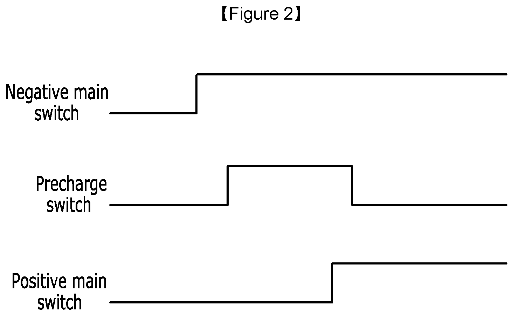

FIG. 1 is a drawing illustrating a battery device according to an embodiment, and FIG. 2 is a drawing illustrating switching timings in the battery device according to the embodiment.

Referring to FIG. 1, a battery device 100 has such a structure that it can be electrically connected to an external device 10 through a positive connection terminal DC(+) and a negative connection terminal DC(-). In the case where the external device is a load, the battery device 100 operates as a power source for supplying power to the load, thereby being discharged. The external device 10 operating as a load may be, for example, an electronic apparatus, a transportation means, or an energy storage system (ESS), and the transportation means may be, for example, an electric vehicle, a hybrid vehicle, or smart mobility.

The battery device 100 includes a battery pack 110, a switch circuit, a precharge circuit, a sensing circuit 140, and a processor 150.

The battery pack 110 includes a plurality of battery cells (not shown in the drawings), and has a positive terminal PV(+) and a negative terminal PV(-).

In some embodiments, the battery cells may be secondary batteries which are rechargeable. In an embodiment, in the battery pack 110, a predetermined number of battery cells may be connected in series to constitute a battery module, and supply desired power. In another embodiment, in the battery pack 110, a predetermined number of battery modules may be connected in series or in parallel, and supply desired power.

The switch circuit includes a positive main switch 121 connected between the positive terminal PV(+) of the battery pack 110 and the positive connection terminal DC(+) of the battery device 100, and a negative main switch 122 connected between the negative terminal PV(-) of the battery pack 110 and the negative connection terminal DC(-) of the battery device 100. In an embodiment, each of the switches 121 and 122 may be a contactor composed of a relay. In another embodiment, each of the switches 121 and 122 may be an electric switch such as a transistor. In some embodiments, the switch circuit may further include driver circuits (not shown in the drawings) which control the switches 121 and 122, respectively.

The precharge circuit is connected between the positive terminal PV(+) of the battery pack 110 and the positive connection terminal DC(+) of the battery device 100, and can first charge a capacitor 11 of the external device 10 which is connected to the connection terminals DC(+) and DC(-) during a precharge duration. In some embodiments, the precharge circuit may include a precharge resistor 131 and a precharge switch 132. In the case where the precharge switch 132 is closed, the precharge resistor 131 can be connected between the positive terminal PV(+) of the battery pack 110 and the positive connection terminal DC(+) of the battery device 100. Accordingly, the precharge circuit can first charge the capacitor 11 of the external device 10 through the precharge resistor 131. In some embodiments, the precharge resistor 131 and the precharge switch 132 may be connected in series between the positive terminal PV(+) of the battery pack 110 and the positive connection terminal DC(+) of the battery device 100. In an embodiment, the precharge switch 132 may be a contactor composed of a relay. In another embodiment, the precharge switch 132 may be an electric switch such as a transistor. In some embodiments, the precharge circuit may further include a driver circuit (not shown in the drawings) which controls the precharge switch 132.

The sensing circuit 140 senses the voltage on a predetermined point in the battery device 100. In some embodiments, the sensing circuit 140 may sense the voltage of the positive connection terminal DC(+) of the battery device 100. In some embodiments, the sensing circuit 140 may include a plurality of resistors (not shown in the drawings) connected in series between the positive connection terminal DC(+) and a ground terminal. In this case, the sensing circuit 140 may sense a voltage obtained by dividing the voltage of the positive connection terminal DC(+) by the plurality of resistors, as the voltage of the positive connection terminal DC(+). In some embodiments, the sensing circuit 140 may further include an analog-to-digital converter which converts the voltage obtained by the voltage division using the plurality of resistors into a digital signal, and transmits the digital signal to the processor 150.

The processor 150 may control the operations of the switches 121, 122, and 132. Further, the processor 150 may set a precharge duration on the basis of the voltage sensed by the sensing circuit 140. In some embodiments, the processor 150 may diagnose the capacitance of the capacitor 11 on the basis of the voltage sensed by the sensing circuit 140. In some embodiments, the processor 150 may be, for example, a micro controller unit (MCU).

In some embodiments, the sensing circuit 140 and the processor 150 may be included in a battery management system (BMS) of the battery device.

Referring to FIG. 2, during initial driving of the battery device, the processor 150 first closes the negative main switch 122. Next, the processor 150 closes the precharge switch 132 in the state where the negative main switch 122 is closed. Accordingly, precharge current can be supplied to the capacitor 11 of the external device 10 through the precharge resistor 131, whereby the capacitor 11 can be charged. The duration when the precharge switch 132 is closed, whereby the capacitor 11 is charged may be referred to as a precharge duration.

Next, after charging the capacitor 11 of the external device 10, the processor 150 closes the positive main switch 121 in order to transmit the voltage of the battery pack 110 to the external device 10. **In** this case, since precharge has been completed, the processor 150 can open the precharge switch 132. Therefore, it is possible to prevent rush current from occurring when the voltage of the battery pack 110 is supplied to the external device 10 by the voltage to which the capacitor 11 of the external device 10 has been charged. Closing a switch may be referred to as turning on the switch, and opening a switch may be referred to as turning off the switch.

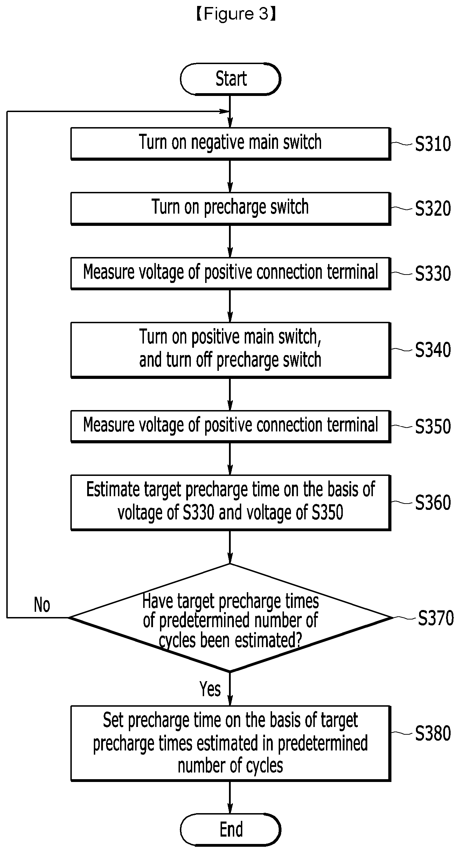

Now, precharge duration setting methods according to various embodiments will be described with reference to FIG. 3 to FIG. 6.

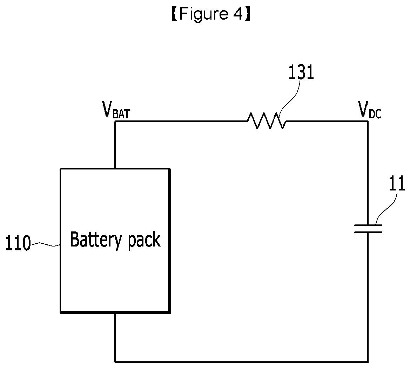

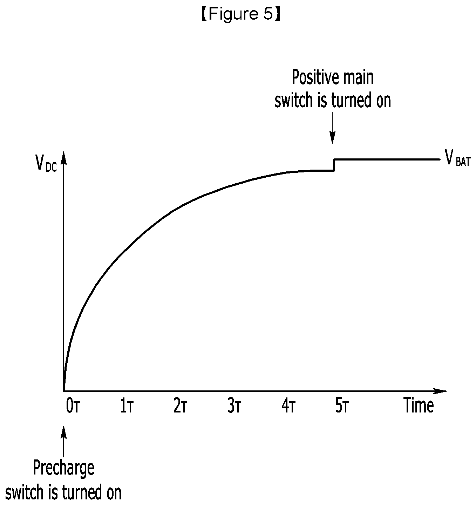

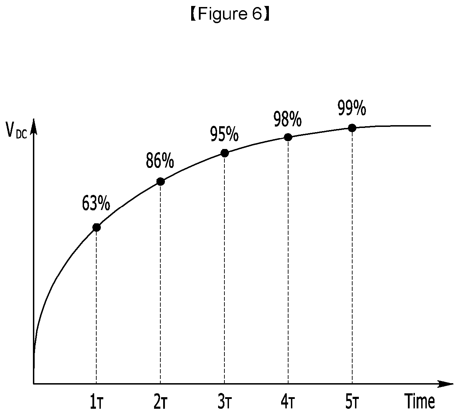

FIG. 3 is a flow chart illustrating an example of a precharge duration setting method of a battery device according to an embodiment, and FIG. 4 is a drawing illustrating an example of an equivalent circuit of a battery device according to an embodiment during a precharge duration. FIG. 5 is a drawing illustrating an example of the voltage of a positive connection terminal in a battery device according to an embodiment, and FIG. 6 is a drawing illustrating voltage ratios depending on multiples of a time constant.

Referring to FIG. 3, the processor (for example, 150 in FIG. 1) of the battery device closes the negative main switch (for example, 122 in FIG. 1) (S310), and closes the precharge switch (for example, 132 in FIG. 1) (S320). Accordingly, a precharge duration starts, and the capacitor of the external device (for example, 11 in FIG. 1) can be charged.

After performing the precharge operation (for example, when the precharge duration ends), the processor 150 closes the positive main switch (for example, 121 in FIG. 1) (S340). The processor 150 may apply the voltage of the battery pack 110 to the positive connection terminal DC(+) by closing the positive main switch 121. Immediately before closing the positive main switch 121 (for example, immediately before applying the voltage of the battery pack 110 to the positive connection terminal DC(+)), the processor 150 measures the voltage of the positive connection terminal (for example, DC(+)) of the battery device sensed by the sensing circuit (for example, 140 in FIG. 1) (S330). Further, immediately after closing the positive main switch 121 (for example, immediately after applying the voltage of the battery pack 110 to the positive connection terminal DC(+)), the processor 150 measures the voltage of the positive connection terminal (DC(+)) of the battery device sensed by the sensing circuit 140 (S350). In some embodiments, after closing the positive main switch 121, the processor 150 may open the precharge switch 132 (S340).

The processor 150 estimates a target time of the precharge duration (hereinafter, referred to as a "target precharge time"), on the basis of the voltage of the positive connection terminal (DC(+)) of the battery device measured immediately before it closed the positive main switch 121 and the voltage of the positive connection terminal (DC(+)) of the battery device measured immediately after it closed the positive main switch 121 (S360). In some embodiments, the processor 150 may store the estimated target precharge time as the target precharge time of the current cycle.

The processor 150 sets the time of the precharge duration (hereinafter, referred to as the "precharge time") of the next cycle, on the basis of the target precharge time (S370, S380). In some embodiments, the processor may set the precharge time of the next cycle, on the basis of the target precharge times of a plurality of cycles. To this end, the processor 150 may determine whether each of the target precharge times of a predetermined number of cycles has been estimated (S370). In the case where the target precharge times of the predetermined number of cycles have not been estimated (S370), the processor 150 may repeat the procedure from S310 when the next cycle starts. In the case where the target precharge times of the predetermined number of cycles have been estimated (S370), the processor 150 may set the precharge time of the next cycle, on the basis of the target precharge times estimated in the predetermined number of cycles (S380). In some embodiments, the processor 150 may set the maximum value of the target precharge times estimated in the predetermined number of cycles, as the precharge time of the next cycle (S380). In some embodiments, the predetermined number may be 5.

Meanwhile, as shown in FIG. 4, when the precharge switch 132 is closed, an RC equivalent circuit may be formed by the battery pack 110, the precharge resistor 131, and the capacitor 11. Then, the voltage of the capacitor 11, that is, the voltage $V_{DC}$ of the positive connection terminal DC(+) increases on the basis of the time constant $\tau$ of an RC equivalent circuit 410, as shown in FIG. 5. The voltage $V_{DC}$ of the capacitor 11 may vary, for example, as Equation 1.

(Equation 1)

$$V_{DC} = V_{BAT}\left(1 - e^{-t/\tau}\right)$$

In Equation 1, the time constant $\tau$ is defined as the product of the resistance value $R_P$ of the precharge resistor 131 and the capacitance $C_{EX}$ of the capacitor 11.

As shown in FIG. 5, immediately after the positive main switch 121 is closed, the voltage of the positive connection terminal DC(+) is changed to the voltage $V_{BAT}$ of the battery pack 110. The voltage of the positive connection terminal DC(+) measured immediately after the positive main switch 121 was closed corresponds to the voltage $V_{BAT}$ of the battery pack 110. Therefore, the processor 150 may estimate the time constant on the basis of the voltage $V_{DC}$ of the positive connection terminal DC(+) measured immediately before the positive main switch 121 was closed (the voltage of the capacitor 11 measured when the precharge duration ended), and the voltage $V_{BAT}$ of the positive connection terminal DC(+) (the voltage of the battery pack 110) measured immediately after the positive main switch 121 was closed. For example, the time constant $\tau$ can be calculated from Equation 1 by setting the voltage of the positive connection terminal DC(+) measured immediately before the positive main switch 121 was closed, the voltage of the positive connection terminal DC(+) measured immediately after the positive main switch 121 was closed, and the precharge duration of the current cycle as $V_{DC}$, $V_{BAT}$, and t, respectively.

Therefore, the processor 150 may set a target precharge time on the basis of the time constant $\tau$. In some embodiments, the processor 150 may set n times the time constant as the target precharge time (wherein n is a positive real number). As shown in FIG. 6, in the equivalent circuit shown in FIG. 4, the voltage $V_{DC}$ of the capacitor 11 at 1 times the time constant ($\tau$) corresponds to 63% of the voltage $V_{BAT}$ of the battery pack 110, and the voltage $V_{DC}$ of the capacitor 11 at 2 times the time constant ($2\tau$) corresponds to 86% of the voltage $V_{BAT}$ of the battery pack 110, and the voltage $V_{DC}$ of the capacitor 11 at 3 times the time constant ($3\tau$) corresponds to 95% of the voltage $V_{BAT}$ of the battery pack 110, and the voltage $V_{DC}$ of the capacitor 11 at 4 times the time constant ($4\tau$) corresponds to 98% of the voltage $V_{BAT}$ of the battery pack 110, and the voltage $V_{DC}$ of the capacitor 11 at 5 times the time constant ($5\tau$) corresponds to 99% of the voltage $V_{BAT}$ of the battery pack 110. For example, the processor 150 may set 5 times the time constant ($5\tau$) at which the voltage $V_{DC}$ of the capacitor 11 becomes 99% of the voltage $V_{BAT}$ of the battery pack 110, as the target precharge time. In the case of setting 5 times the time constant ($5\tau$) as the target precharge time, since the positive main switch 121 is closed when the voltage $V_{DC}$ of the positive connection terminal DC(+) reaches 99% of the voltage $V_{BAT}$ of the battery pack 110, damage to the positive main switch 121 can be minimized. Besides, in some embodiments, in the case where the maximum value of target precharge times of a plurality of cycles is selected, it is possible to select such a time that damage to the positive main switch 121 can be minimized, in consideration of the deviation of measurements in the plurality of cycles.

According to the embodiments described above, the precharge time is set on the basis of the target precharge times estimated in the predetermined number of cycles. Therefore, it is possible to set an accurate precharge time. In this case, even if the capacitance of the capacitor varies, the precharge time can be adaptively set. Further, since the voltage of the positive connection terminal DC(+) is measured immediately before the positive main switch 121 is closed and immediately after the positive main switch 121 is closed, it is possible to minimize the difference between the two voltage measurement time points. In other words, since the two voltage measurements are performed in substantially the same environment, it is possible to minimize errors in elements related to voltage measurement, thereby accurately estimating the time constant.

As described above, the processor 150 may set a precharge time in the next cycle, on the basis of the target precharge times estimated in the predetermined number of cycles, respectively. Therefore, the precharge time of the current cycle may be set on the basis of the target precharge times estimated in the predetermined number of previous cycles, respectively. For example, the precharge time of the i-th cycle may be set on the basis of the target precharge times estimated in the (i-5)-th to (i-1)-th cycles, respectively. On the other hand, there may be a case where the target precharge times of the predetermined number of previous cycles required to set the precharge time of the current cycle are not stored. For example, in the first cycle, since no previous cycle has been performed, target precharge times of previous cycles may not exist. Further, even in the second to fifth cycles, since the predetermined number of previous cycles have not been performed, target precharge times of the predetermined number of previous cycles may not exist. In this case, the precharge time of the current cycle may not be set.

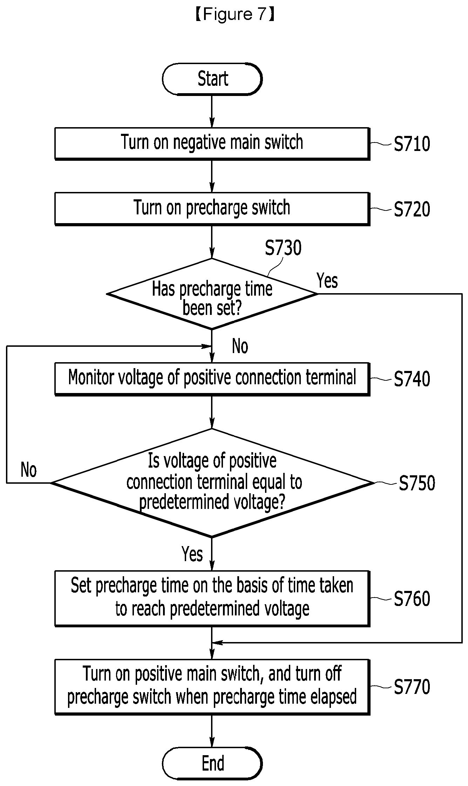

Hereinafter, an embodiment in which when the precharge time of the current cycle has not been set, the precharge time is set will be described with reference to FIG. 7.

FIG. 7 is a flow chart illustrating an example of a method of setting an initial value of a precharge time in a battery device according to another embodiment.

Referring to FIG. 7, the processor of the battery device (for example, reference numeral 150 in FIG. 1) closes the negative main switch (for example, reference numeral 122 in FIG. 1) (S710), and closes the precharge switch (for example, reference numeral 132 in FIG. 1) (S720). Accordingly, a precharge duration starts, and the capacitor of the external device (for example, reference numeral 11 in FIG. 1) can be charged. In some embodiments, when a precharge duration starts, the processor 150 may activate a timer to measure the elapsed time of the precharge duration. For example, the processor 150 may activate the timer when closing the precharge switch 132.

The processor 150 determines whether the precharge time of the current cycle has been set (S730). In some embodiments, the processor 150 may determine whether the precharge time of the current cycle has been set, on the basis of the target precharge times of the predetermined number of previous cycles (S730). In some embodiments, the processor 150 may compare the number of previous cycles in which target precharge times have been estimated, with the predetermined number (S730).

In the case where the precharge time of the current cycle has not been set (S730), the processor 150 monitors the voltage $V_{DC}$ of the positive connection terminal (for example, DC(+)) of the battery device through the sensing circuit (for example, 140 in FIG. 1) (S740). While monitoring the voltage $V_{DC}$ of the positive connection terminal DC(+), the processor 150 compares the voltage of the positive connection terminal DC(+) with a predetermined voltage (S750). The predetermined voltage is a voltage determined on the basis of the voltage $V_{BAT}$ of the battery pack (for example, 110 in FIG. 1). In some embodiments, the sensing circuit 140 may sense the voltage of the positive terminal PV(+) of the battery pack 110, whereby the processor 150 may measure the voltage $V_{BAT}$ of the battery pack 110. In some embodiments, the predetermined voltage may be set on the basis of the voltage $V_{BAT}$ of the battery pack 110 and m times the time constant (wherein m is a positive real number). In some embodiments, the predetermined voltage may be set such that the ratio of the predetermined voltage to the voltage $V_{BAT}$ of the battery pack 110 is equal to the ratio of the voltage of the capacitor 11 to the voltage $V_{BAT}$ of the battery pack 110 that is obtained in the equivalent circuit shown in FIG. 4 when the precharge time corresponding to m times the time constant elapses. For example, as the predetermined voltage, 86% of the voltage $V_{BAT}$ of the battery pack 110, that is, $0.86V_{BAT}$ may be set on the basis of 2 times the time constant.

In the case where the voltage of the positive connection terminal DC(+) reaches the predetermined voltage (S750), the processor 150 sets the precharge time (initial precharge time) of the current cycle on the basis of the time taken for the voltage of the positive connection terminal DC(+) to reach the predetermined voltage (S760). In some embodiments, the processor 150 may set the initial precharge time on the basis of the time taken for the voltage $V_{BAT}$ of the battery pack 110 to reach the predetermined voltage and m times the time constant used to set the predetermined voltage (S760). In some embodiments, the processor 150 may set k times the time taken for the voltage $V_{BAT}$ of the battery pack 110 to reach the predetermined voltage, as the initial precharge time (wherein k is a positive real number). In this case, the initial precharge time may be set to (k*m) times the time constant. In some embodiments, (k*m) may be set to be larger than n times the time constant used to set the above-described target precharge time. For example, in the case where the target precharge time is set to 5 times the time constant (n = 5), and the predetermined voltage is set on the basis of 2 times the time constant (m = 2), the initial precharge time may be set to 6 times the time constant (k = 3). As described above, the initial precharge time is set to be long. Therefore, it is possible to minimize damage to the positive main switch (for example, 121 in FIG. 1) attributable to errors in voltage measurement.

In the case where the initial precharge time is set (S760), when the initial precharge time set in S760 elapses from the time when the precharge duration starts, the processor 150 closes the positive main switch 121 (S770). In the case where the precharge time has been already set (S730), when the set precharge time elapses from the time when the precharge duration starts, the processor 150 closes the positive main switch 121 (S770). Accordingly, the precharge duration ends. In some embodiments, the processor 150 may open the precharge switch 132 after closing the positive main switch 121 (S770).

In some embodiments, the processor 150 may measure the voltage of the positive connection terminal DC(+) of the battery device immediately before closing the positive main switch 121 as described with reference to FIG. 3, and measure the voltage of the positive connection terminal DC(+) of the battery device immediately after closing the positive main switch 121. The processor 150 may estimate the target precharge time of the current cycle on the basis of the voltage of the positive connection terminal DC(+) of the battery device measured immediately before it closed the positive main switch 121 and the voltage of the positive connection terminal DC(+) of the battery device measured immediately after it closed the positive main switch 121.

As described above, in the case where target precharge times in previous cycles are not estimated, an initial precharge time can be set.

## Claims

1. A battery management system for a battery device (100), wherein the battery device includes a battery pack (110), and a positive connection terminal and a negative connection terminal to be connected to an external device, the battery management system comprising:

    a positive main switch (121) that is configured to be connected between the positive terminal of the battery pack and the positive connection terminal;
    a precharge switch (132) that is configured to be connected between the positive terminal of the battery pack and the positive connection terminal, and to control the precharge operation of a capacitor of the external device (10); and
    a processor (150) configured to estimate a target time of a precharge duration in each of a plurality of cycles, **characterized in that** the processor is further configured to set the time of a precharge duration of the next cycle of the plurality of cycles, on the basis of the target times estimated respectively in the plurality of cycles

2. The battery management system of claim 1, wherein:
    the processor is configured to set the maximum value of the target times estimated respectively in the plurality of cycles, as the time of the precharge duration of the next cycle.

3. The battery management system of claim 1, wherein:
    in each cycle, the processor is configured to perform the following:

    performing precharge by closing the precharge switch during the precharge duration;
    closing the positive main switch after the precharge duration; and
    estimating the target time on the basis of a first voltage of the positive connection terminal immediately before closing the positive main switch and a second voltage of the positive connection terminal immediately after closing the positive main switch.

4. The battery management system of claim 3, wherein the battery device further comprising:
    a precharge resistor that is connected between the positive terminal and the positive connection terminal when the precharge switch is closed.

5. The battery management system of claim 4, wherein:
    the precharge switch and the precharge resistor are connected in series.

6. The battery management system of claim 4, wherein:

the processor is configured to perform followings:

estimating a time constant that is defined by the resistance value of the precharge resistor and the capacitance of the capacitor, on the basis of the first voltage and the second voltage; and estimating a predetermined multiple of the time constant as the target time.

7. The battery management system of claim 4, wherein:
in a cycle in which the time of the precharge duration has not been set, the processor is configured to set the time of the precharge duration of the corresponding cycle on the basis of the time taken for the voltage of the positive connection terminal to reach a predetermined voltage in the precharge duration.

8. The battery management system of claim 7, wherein:

the predetermined voltage is a voltage corresponding to a predetermined ratio to the voltage of the battery pack, and
the predetermined ratio is determined on the basis of the predetermined multiple of the time constant defined by the resistance value of the precharge resistor and the capacitance of the capacitor.

9. The battery management system of claim 7, wherein:
in a cycle in which the time of the precharge duration has not been set, the processor is configured to estimate the time constant on the basis of the time taken for the voltage of the positive connection terminal to reach the predetermined voltage during the precharge duration, and is configured to set the predetermined multiple of the time constant as the time of the precharge duration of the corresponding cycle.

10. A precharge duration setting method of a battery management system of a battery device, wherein the battery device includes a battery pack, and a positive connection terminal and a negative connection terminal to be connected to an external device, the method comprises:

a step of performing a precharge operation of precharging a capacitor connected to the positive connection terminal and the negative connection terminal through a precharge resistor during the precharge duration of each of a plurality of cycles;
a step of estimating a target time of the precharge duration in each of the plurality of cycles; and **characterized by**

a step of setting the time of the precharge duration of the next cycle of the plurality of cycles, on the basis of the target times estimated in the plurality of cycles, respectively.

11. The precharge duration setting method of claim 10, wherein:
the step of setting the time of the precharge duration includes a step of setting the maximum value of the target times estimated respectively in the plurality of cycles, as the time of the precharge duration of the next cycle.

12. The precharge duration setting method of claim 10, wherein:
the step of estimating the target time includes:

a step of applying the voltage of the battery pack to the positive connection terminal after performing the precharge operation;
a step of measuring the voltage of the positive connection terminal as a first voltage immediately before applying the voltage of the battery pack;
a step of measuring the voltage of the positive connection terminal as a second voltage immediately after applying the voltage of the battery pack; and
a step of estimating the target time on the basis of the first voltage and the second voltage.

13. The precharge duration setting method of claim 10, wherein:
the step of estimating the target time on the basis of the first voltage and the second voltage includes:

a step of estimating a time constant that is defined by the resistance value of the precharge resistor and the capacitance of the capacitor, on the basis of the first voltage and the second voltage; and
a step of estimating a predetermined multiple of the time constant as the target time.

14. The precharge duration setting method of claim 10, further comprising:
a step of setting the time of the precharge duration of a cycle in which the time of the precharge duration has not been set, on the basis of the time taken for the voltage of the positive connection terminal to reach a predetermined voltage, during the precharge duration of the corresponding cycle.

15. A battery device having a positive connection terminal and a negative connection terminal to be connected to an external device, **characterized in that** the battery device comprising:

a battery pack;
a battery management system according to any one of the preceding claims 1 to 9.

**Patentansprüche**

1. Batteriemanagementsystem für eine Batterievorrichtung (100), wobei die Batterievorrichtung einen Batteriepack (110) und einen positiven Verbindungsanschluss und einen negativen Verbindungsanschluss umfasst, welche mit einer externen Vorrichtung zu verbinden sind, wobei das Batteriemanagementsystem umfasst:

   einen positiven Hauptschalter (121), welcher dazu eingerichtet ist, zwischen dem positiven Anschluss des Batteriepacks und dem positiven Verbindungsanschluss verbunden zu sein;
   einen Vorladeschalter (132), welcher dazu eingerichtet ist, zwischen dem positiven Anschluss des Batteriepacks und dem positiven Verbindungsanschluss verbunden zu sein und den Vorladevorgang eines Kondensators der externen Vorrichtung (10) zu steuern; und
   einen Prozessor (150), welcher dazu eingerichtet ist, in jedem einer Mehrzahl von Zyklen eine Zielzeit einer Vorladedauer zu schätzen, **dadurch gekennzeichnet, dass** der Prozessor ferner dazu eingerichtet ist, auf der Grundlage der jeweils in der Mehrzahl von Zyklen geschätzten Zielzeiten die Zeit einer Vorladedauer des nächsten Zyklus der Mehrzahl von Zyklen einzustellen.

2. Batteriemanagementsystem nach Anspruch 1, wobei:
   der Prozessor dazu eingerichtet ist, den maximalen Wert der jeweils in der Mehrzahl von Zyklen geschätzten Zielzeiten als die Zeit der Vorladedauer des nächsten Zyklus einzustellen.

3. Batteriemanagementsystem nach Anspruch 1, wobei:
   in jedem Zyklus, der Prozessor dazu eingerichtet ist, das Folgende durchzuführen:

   Durchführen eines Vorladens durch ein Schließen des Vorladeschalters während der Vorladedauer;
   Schließen des positiven Hauptschalters nach der Vorladedauer; und
   Schätzen der Zielzeit auf der Grundlage einer ersten Spannung des positiven Verbindungsanschlusses unmittelbar vor dem Schließen des positiven Hauptschalters und einer zweiten Spannung des positiven Verbindungsanschlusses unmittelbar nach dem Schließen des positiven Hauptschalters.

4. Batteriemanagementsystem nach Anspruch 3, wobei die Batterievorrichtung ferner umfasst:
   einen Vorladewiderstand, welcher zwischen dem positiven Anschluss und dem positiven Verbindungsanschluss verbunden ist, wenn der Vorladeschalter geschlossen ist.

5. Batteriemanagementsystem nach Anspruch 4, wobei:
   der Vorladeschalter und der Vorladewiderstand in Reihe verbunden sind.

6. Batteriemanagementsystem nach Anspruch 4, wobei:
   der Prozessor dazu eingerichtet ist, Folgendes durchzuführen:

   Schätzen einer Zeitkonstante, welche durch den Widerstandswert des Vorladewiderstands und die Kapazität des Kondensators definiert ist, auf der Grundlage der ersten Spannung und der zweiten Spannung; und
   Schätzen eines vorbestimmen Vielfachen der Zeitkonstante als die Zielzeit.

7. Batteriemanagementsystem nach Anspruch 4, wobei:
   in einem Zyklus, in welchem die Zeit der Vorladedauer nicht eingestellt worden ist, der Prozessor dazu eingerichtet ist, auf der Grundlage der Zeit, welche die Spannung des positiven Verbindungsanschlusses benötigt, um in der Vorladedauer eine vorbestimmte Spannung zu erreichen, die Zeit der Vorladedauer des entsprechenden Zyklus einzustellen.

8. Batteriemanagementsystem nach Anspruch 7, wobei:

   die vorbestimmte Spannung eine einem vorbestimmten Verhältnis der Spannung des Batteriepacks entsprechende Spannung ist und
   das vorbestimmte Verhältnis auf der Grundlage des vorbestimmten Vielfachen der durch den Widerstandswert des Vorladewiderstands und die Kapazität des Kondensators definierten Zeitkonstante bestimmt wird.

9. Batteriemanagementsystem nach Anspruch 7, wobei:
   in einem Zyklus, in welchem die Zeit der Vorladedauer nicht eingestellt worden ist, der Prozessor dazu eingerichtet ist, auf der Grundlage der Zeit, welche die Spannung des positiven Verbindungsanschlusses benötigt, um während der Vorladedauer die vorbestimmte Spannung zu erreichen, die Zeitkonstante zu schätzen, und dazu eingerichtet ist, das vorbestimmte Vielfache der Zeitkonstante als die Zeit der Vorladedauer des entsprechenden Zyklus einzustellen.

10. Vorladedauereinstellverfahren eines Batteriemanagementsystems einer Batterievorrichtung, wobei die Batterievorrichtung einen Batteriepack und einen positiven Verbindungsanschluss und einen negativen Verbindungsanschluss umfasst, welche mit einer externen Vorrichtung zu verbinden sind, wobei das Verfahren umfasst:

einen Schritt eines Durchführens eines Vorladevorgangs eines Vorladens eines mit dem positiven Verbindungsanschluss und dem negativen Verbindungsanschluss verbundenen Kondensators über einen Vorladewiderstand während der Vorladedauer jedes einer Mehrzahl von Zyklen;
einen Schritt eines Schätzens einer Zielzeit der Vorladedauer in jedem der Mehrzahl von Zyklen; und
**gekennzeichnet durch**
einen Schritt eines Einstellens der Zeit der Vorladedauer des nächsten Zyklus der Mehrzahl von Zyklen auf der Grundlage der jeweils in der Mehrzahl von Zyklen geschätzten Zielzeiten.

11. Vorladedauereinstellverfahren nach Anspruch 10, wobei:
der Schritt des Einstellens der Zeit der Vorladedauer einen Schritt eines Einstellens des maximalen Werts der jeweils in der Mehrzahl von Zyklen geschätzten Zielzeiten als die Zeit der Vorladedauer des nächsten Zyklus umfasst.

12. Vorladedauereinstellverfahren nach Anspruch 10, wobei:
der Schritt des Schätzens der Zielzeit umfasst:

einen Schritt eines Anlegens der Spannung des Batteriepacks an den positiven Verbindungsanschluss nach dem Durchführen des Vorladevorgangs;
einen Schritt eines Messens der Spannung des positiven Verbindungsanschlusses als eine erste Spannung unmittelbar vor dem Anlegen der Spannung des Batteriepacks;
einen Schritt eines Messens der Spannung des positiven Verbindungsanschlusses als eine zweite Spannung unmittelbar nach dem Anlegen der Spannung des Batteriepacks; und
einen Schritt eines Schätzens der Zielzeit auf der Grundlage der ersten Spannung und der zweiten Spannung.

13. Vorladedauereinstellverfahren nach Anspruch 10, wobei:
der Schritt des Schätzens der Zielzeit auf der Grundlage der ersten Spannung und der zweiten Spannung umfasst:

einen Schritt eines Schätzens einer Zeitkonstante, welche durch den Widerstandswert des Vorladewiderstands und die Kapazität des Kondensators definiert ist, auf der Grundlage der ersten Spannung und der zweiten Spannung; und
einen Schritt eines Schätzens eines vorbestimmten Vielfachen der Zeitkonstante als die Zielzeit.

14. Vorladedauereinstellverfahren nach Anspruch 10,ferner umfassend:
einen Schritt eines Einstellens der Zeit der Vorladedauer eines Zyklus, in welchem die Zeit der Vorladedauer nicht eingestellt worden ist, auf der Grundlage der Zeit, welche die Spannung des positiven Verbindungsanschlusses benötigt, um während der Vorladedauer des entsprechenden Zyklus eine vorbestimmte Spannung zu erreichen.

15. Batterievorrichtung, welche einen positiven Verbindungsanschluss und einen negativen Verbindungsanschluss aufweist, die mit einer externen Vorrichtung zu verbinden sind, **dadurch gekennzeichnet, dass** die Batterievorrichtung umfasst:

einen Batteriepack;
ein Batteriemanagementsystem nach einem der vorhergehenden Ansprüche 1 bis 9.

## Revendications

1. Système de gestion de batterie pour un dispositif de batterie (100), dans lequel le dispositif de batterie comporte un bloc-batterie (110), et une borne de connexion positive et une borne de connexion négative destinées à être connectées à un dispositif externe, le système de gestion de batterie comprenant :

un commutateur principal positif (121) qui est configuré pour être connecté entre la borne positive du bloc-batterie et la borne de connexion positive ;
un commutateur de précharge (132) qui est configuré pour être connecté entre la borne positive du bloc-batterie et la borne de connexion positive, et pour commander l'opération de précharge d'un condensateur du dispositif externe (10) ; et
un processeur (150) configuré pour estimer un temps cible d'une durée de précharge dans chacun d'une pluralité de cycles, **caractérisé en ce que** le processeur est en outre configuré pour régler le temps d'une durée de précharge du cycle suivant de la pluralité de cycles, sur la base des temps cibles estimés respectivement dans la pluralité de cycles.

2. Système de gestion de batterie selon la revendication 1, dans lequel :
le processeur est configuré pour régler la valeur maximale des temps cibles estimés respectivement dans la pluralité de cycles, en tant que temps de la durée de précharge du cycle suivant.

3. Système de gestion de batterie selon la revendication 1, dans lequel :
dans chaque cycle, le processeur est configuré pour réaliser les étapes suivantes :

la réalisation d'une précharge par fermeture du commutateur de précharge pendant la durée de précharge ;
la fermeture du commutateur principal positif après la durée de précharge ; et
l'estimation du temps cible sur la base d'une première tension de la borne de connexion positive juste avant la fermeture du commutateur principal positif et d'une deuxième tension de la borne de connexion positive juste après la fermeture du commutateur principal positif.

4. Système de gestion de batterie selon la revendication 3, dans lequel le dispositif de batterie comprend en outre :
une résistance de précharge qui est connectée entre la borne positive et la borne de connexion positive lorsque le commutateur de précharge est fermé.

5. Système de gestion de batterie selon la revendication 4, dans lequel :
le commutateur de précharge et la résistance de précharge sont connectés en série.

6. Système de gestion de batterie selon la revendication 4, dans lequel :
le processeur est configuré pour réaliser les étapes suivantes :

l'estimation d'une constante de temps qui est définie par la valeur de résistance de la résistance de précharge et la capacité du condensateur, sur la base de la première tension et de la deuxième tension ; et
l'estimation d'un multiple prédéterminé de la constante de temps en tant que temps cible.

7. Système de gestion de batterie selon la revendication 4, dans lequel :

dans un cycle dans lequel le temps de la durée de précharge n'a pas été réglé, le processeur est configuré pour régler le temps de la durée de précharge du cycle correspondant sur la base du temps nécessaire à la tension de la borne de connexion positive pour atteindre une tension prédéterminée pendant la durée de précharge.

8. Système de gestion de batterie selon la revendication 7, dans lequel :

la tension prédéterminée est une tension correspondant à un rapport prédéterminé avec la tension du bloc-batterie, et
le rapport prédéterminé est déterminé sur la base du multiple prédéterminé de la constante de temps définie par la valeur de résistance de la résistance de précharge et la capacité du condensateur.

9. Système de gestion de batterie selon la revendication 7, dans lequel :
dans un cycle dans lequel le temps de la durée de précharge n'a pas été réglé, le processeur est configuré pour estimer la constante de temps sur la base du temps nécessaire à la tension de la borne de connexion positive pour atteindre la tension prédéterminée pendant la durée de précharge, et est configuré pour régler le multiple prédéterminé de la constante de temps en tant que temps de la durée de précharge du cycle correspondant.

10. Procédé de réglage de la durée de précharge d'un système de gestion de batterie d'un dispositif de batterie, dans lequel le dispositif de batterie comporte un bloc-batterie, et une borne de connexion positive et une borne de connexion négative destinées à être connectées à un dispositif externe, le procédé comprenant :

une étape de réalisation d'une opération de précharge consistant à précharger un condensateur connecté à la borne de connexion positive et à la borne de connexion négative à travers une résistance de précharge pendant la durée de précharge de chacun d'une pluralité de cycles ;
une étape d'estimation d'un temps cible de la durée de précharge dans chacun de la pluralité de cycles ; et **caractérisé par**
une étape de réglage du temps de la durée de précharge du cycle suivant de la pluralité de cycles, sur la base des temps cibles estimés dans la pluralité de cycles, respectivement.

11. Procédé de réglage de la durée de précharge selon la revendication 10, dans lequel : l'étape de réglage du temps de la durée de précharge comporte une étape de réglage de la valeur maximale des temps cibles estimés respectivement dans la pluralité de cycles, en tant que temps de la durée de précharge du cycle suivant.

**12.** Procédé de réglage de la durée de précharge selon la revendication 10, dans lequel :
l'étape d'estimation du temps cible comporte :

une étape d'application de la tension du bloc-batterie à la borne de connexion positive après réalisation de l'opération de précharge ;
une étape de mesure de la tension de la borne de connexion positive en tant que première tension juste avant l'application de la tension du bloc-batterie ;
une étape de mesure de la tension de la borne de connexion positive en tant que deuxième tension juste après l'application de la tension du bloc-batterie ; et
une étape d'estimation du temps cible sur la base de la première tension et de la deuxième tension.

**13.** Procédé de réglage de la durée de précharge selon la revendication 10, dans lequel :
l'étape d'estimation du temps cible sur la base de la première tension et de la deuxième tension comporte :

une étape d'estimation d'une constante de temps qui est définie par la valeur de résistance de la résistance de précharge et la capacité du condensateur, sur la base de la première tension et de la deuxième tension ; et
une étape d'estimation d'un multiple prédéterminé de la constante de temps en tant que temps cible.

**14.** Procédé de réglage de la durée de précharge selon la revendication 10, comprenant en outre :
une étape de réglage du temps de la durée de précharge d'un cycle dans lequel le temps de la durée de précharge n'a pas été réglé, sur la base du temps nécessaire à la tension de la borne de connexion positive pour atteindre une tension prédéterminée, pendant la durée de précharge du cycle correspondant.

**15.** Dispositif de batterie ayant une borne de connexion positive et une borne de connexion négative destinées à être connectées à un dispositif externe, **caractérisé en ce que** le dispositif de batterie comprenant :

un bloc-batterie ;
un système de gestion de batterie selon l'une quelconque des revendications 1 à 9 précéden-

tes.

【Figure 1】

【Figure 2】

Negative main
switch

Precharge
switch

Positive main
switch

【Figure 3】

```
                    ┌──────────┐
                    │  Start   │
                    └────┬─────┘
                         │
  ┌──────────────────────┼────────────────────────┐
  │  ┌──────────────────────────────────────────┐ │
  │  │      Turn on negative main switch        │─┼── S310
  │  └─────────────────┬────────────────────────┘ │
  │                    │                           │
  │  ┌──────────────────────────────────────────┐ │
  │  │        Turn on precharge switch          │─┼── S320
  │  └─────────────────┬────────────────────────┘ │
  │                    │                           │
  │  ┌──────────────────────────────────────────┐ │
  │  │ Measure voltage of positive connection   │─┼── S330
  │  │              terminal                    │ │
  │  └─────────────────┬────────────────────────┘ │
  │                    │                           │
  │  ┌──────────────────────────────────────────┐ │
  │  │       Turn on positive main switch,      │─┼── S340
  │  │      and turn off precharge switch       │ │
  │  └─────────────────┬────────────────────────┘ │
  │                    │                           │
  │  ┌──────────────────────────────────────────┐ │
  │  │ Measure voltage of positive connection   │─┼── S350
  │  │              terminal                    │ │
  │  └─────────────────┬────────────────────────┘ │
  │                    │                           │
  │  ┌──────────────────────────────────────────┐ │
  │  │ Estimate target precharge time on the    │─┼── S360
  │  │ basis of voltage of S330 and voltage     │ │
  │  │             of S350                      │ │
  │  └─────────────────┬────────────────────────┘ │
  │                    │                           │
  │         No    ◇────────────◇                  │
  └───────────────  Have target  ────── S370       
                  precharge times
                  of predetermined
                  number of cycles
                  been estimated?
                    ◇────────────◇
                         │ Yes
                    ┌──────────────────────────────┐
                    │ Set precharge time on the    │── S380
                    │ basis of target precharge    │
                    │ times estimated in           │
                    │ predetermined number of      │
                    │ cycles                       │
                    └──────────────┬───────────────┘
                                   │
                            ┌──────────┐
                            │   End    │
                            └──────────┘
```

【Figure 4】

【Figure 5】

【Figure 6】

【Figure 7】

```
                        ┌─────────────┐
                        │    Start     │
                        └──────┬──────┘
                               │
              ┌────────────────▼────────────────┐
              │   Turn on negative main switch   │──── S710
              └────────────────┬────────────────┘
                               │
              ┌────────────────▼────────────────┐
              │      Turn on precharge switch    │──── S720
              └────────────────┬────────────────┘
                               │        S730
                        ╱──────▼──────╲         Yes
                       ╱ Has precharge  ╲──────────────────┐
                       ╲ time been set?  ╱                 │
                        ╲───────┬───────╱                  │
                               │ No                        │
              ┌────────────────▼─────────────────────┐     │
         ┌───▶│ Monitor voltage of positive connection│─ S740 │
         │    │              terminal                 │     │
         │    └────────────────┬─────────────────────┘     │
         │                     │                           │
         │            ╱────────▼────────╲                  │
         │  No       ╱  Is voltage of     ╲                │
         └──────────╱ connection terminal  ╲── S750        │
                    ╲ equal to predetermined╱              │
                     ╲    voltage?          ╱              │
                      ╲────────┬───────────╱               │
                            Yes│                           │
              ┌────────────────▼─────────────────────┐     │
              │ Set precharge time on the basis of    │─ S760 │
              │ time taken to reach predetermined     │     │
              │ voltage                               │     │
              └────────────────┬─────────────────────┘     │
                               │◀──────────────────────────┘
              ┌────────────────▼─────────────────────┐
              │ Turn on positive main switch, and turn│─ S770
              │ off precharge switch when precharge   │
              │ time elapsed                          │
              └────────────────┬─────────────────────┘
                               │
                        ┌──────▼──────┐
                        │     End      │
                        └─────────────┘
```

**EP 4 404 426 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20180068370 A
- JP 2021027605 A
- US 2020195016 A1
- KR 20180068370